# EUROPÄISCHE PATENTANMELDUNG

(11) **EP 2 578 274 A2**
(43) Veröffentlichungstag der Anmeldung: **10.04.2013**
(21) Anmeldenummer: 12183094.7
(22) Anmeldetag: 05.09.2012
(51) Int. Cl.: A62C 2/06

(54) **Halter für eine Brandschutzmanschette und Verwendung dieses Halters**

(30) Priorität: 05.10.2011 DE 102011084057
(71) Anmelder: HILTI Aktiengesellschaft, 9494 Schaan (LI)
(72) Erfinder: Paetow, Mario, 86859 Igling (DE); Semler, Rudolf, 86931 Prittriching (DE)

(57) **Zusammenfassung**

Das Verankerungselement dient der Verankerung des Halters an einem Untergrund, das Andruckelement ist dafür vorgesehen mit der Brandschutzmanschette zusammenzuwirken. Das Andruckelement ist relativ zu dem Verankerungselement verstellbar. Ein Expansionselement aus Intumeszenzmaterial ist zwischen dem Verankerungselement und dem Andruckelement angeordnet.

## Beschreibung

Die Erfindung betrifft einen Halter für eine Brandschutzmanschette sowie die Verwendung dieses Halters als Befestigungsmaterial für eine Brandschutzmanschette.

Die um die Rohre oder Kabel herum angeordnete Brandschutzmanschette umfasst Intumeszenzmaterial, welches sich bei Hitze ausdehnt und den Durchbruch möglichst dicht verschließt, so dass eine Ausbreitung des Feuers verhindert werden kann. Je nach Durchmesser des Durchbruches ist es möglich, die Brandschutzmanschette an einem äußeren Ende des Durchbruchs, z.B. an der Wand oder Decke, oder aber direkt in dem Durchbruch anzuordnen. Wird die Brandschutzmanschette am Eingang des Durchbruchs angeordnet, so wird diese üblicherweise mit Halterungen an der Wand oder Decke befestigt.

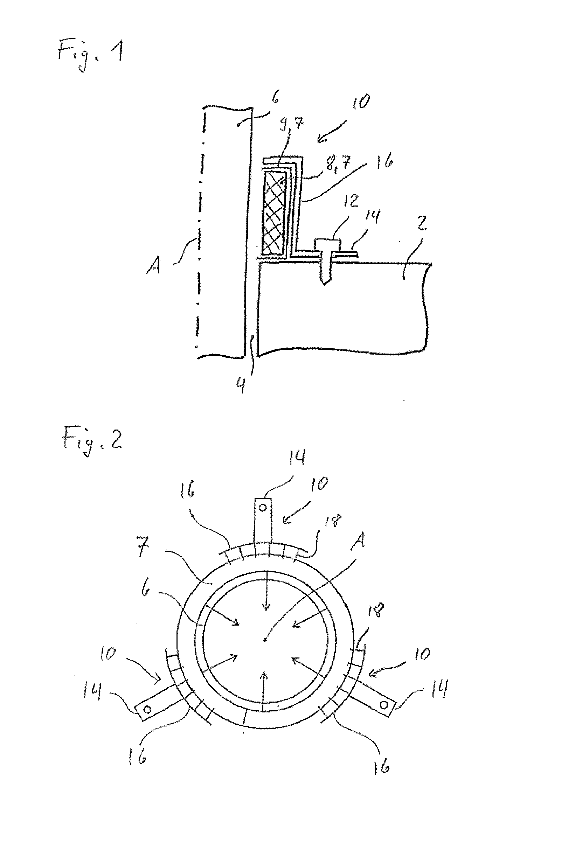

Diese Situation ist beispielhaft in FIG. 1 gezeigt. In einer Wand 2 befindet sich ein Durchbruch 4, durch den ein sich entlang der Längsachse A erstreckendes Rohr 6 geführt ist. Eine Brandschutzmanschette 7, bei der es sich beispielhaft um eine Gewebemanschette handelt, die aus mit einem Gewebe 9 umwickelten Intumeszenzmaterial 8 besteht, umschließt das Rohr 6 am Eingang des Durchbruchs 4 in Umfangsrichtung. Die Brandschutzmanschette 7 wird mit Hilfe eines Halters 10 befestigt. Dieser ist mit einer Schraube 12 an der Wand 2 befestigt und umfasst einen an der Wand 2 anliegenden Befestigungsabschnitt 14 und einen an der Brandschutzmanschette 7 anliegenden Abstützabschnitt 16.

FIG. 2 zeigt eine schematische Draufsicht einer mit Hilfe mehrerer Halter 10 montierten Brandschutzmanschette 7. Die Abstützabschnitte 16 der Halter 10 sind zusätzlich mit Krallen 18 versehen, welche die Brandschutzmanschette 7 fixieren. Im Brandfall dehnt sich das Intumeszenzmaterial 8 in Richtung des Rohres 6 aus (mit Pfeilen angedeutet). Bei dieser bekannten Anordnung besteht jedoch das Problem, dass ein Teil des Intumeszenzmaterials 8 sich in axialer Richtung (d.h. im Wesentlichen parallel zur Längsachse A des Rohres 6) ausbreitet und an der wandseitigen Öffnung des Durchbruchs 4 ausquillt. Auf diese Weise geht Intumeszenzmaterial verloren und steht nicht zum Verschluss des Durchbruchs 4 zur Verfügung. Diesem Problem wird üblicherweise dadurch begegnet, dass eine entsprechend große Menge an Intumeszenzmaterial 8 verwendet wird.

Aufgabe der Erfindung ist es, einen Halter für eine Brandschutzmanschette anzugeben, der eine effiziente Verwendung der Brandschutzmanschette ermöglicht.

Im Sinne der Erfindung umfasst der Begriff "*Brandschutzmanschette*" jegliche Art der Umwickelung eines Rohres mit einem Intumeszenzmaterial, wie eine Gewebemanschette, welche ein Band aus Intumeszenzmaterial ist, das mit einem Gewebeband umwickelt ist, eine Brandschutzbandage oder ein Brandschutzband. Diese beispielhafte Auflistung ist nicht einschränkend aufzufassen.

Zur Lösung dieser Aufgabe ist erfindungsgemäß ein Halter für eine Brandschutzmanschette vorgesehen, der ein Verankerungselement und ein Andruckelement umfasst. Das Verankerungselement ist zur Verankerung des Halters an einem Untergrund befestigt. Das Andruckelement ist dafür vorgesehen, mit der Brandschutzmanschette zusammenzuwirken. Das Andruckelement ist relativ zu dem Verankerungselement verstellbar, wobei zwischen dem Verankerungselement und dem Andruckelement ein Expansionselement aus Intumeszenzmaterial angeordnet ist. Der erfindungsgemäße Halter beruht auf dem Grundgedanken, die Brandschutzmanschette im Brandfall aktiv in Richtung eines in dem Untergrund vorhandenen Durchbruchs zu verschieben. Der Halter ist insbesondere für Gewebemanschetten als Brandschutzmanschetten geeignet, er ist jedoch nicht auf solche Brandschutzmanschetten beschränkt. Es kann sich beispielsweise auch um flexibel verformbare Bänder und Bandagen mit intumeszierendem Material handeln. Der erfindungsgemäße Halter kann für alle Brandschutzmanschetten verwendet werden, die weich und flexibel genug sind, dass sie durch den Intumeszenzdruck des Expansionselementes in Richtung des zu verschließenden Durchbruchs gedrückt werden können. Durch die gezielte Verformung der Brandschutzmanschette kann deren Intumeszenzmaterial in Richtung des Durchbruchs gelenkt werden. So wird das Intumeszenzmaterial effektiv genutzt und eine geringere Menge kann in der Brandschutzmanschette vorgesehen werden, was einen Kostenvorteil bedeutet. Darüber hinaus wird durch die in die zu verschließende Öffnung gerichtete Expansion ein kompakter und damit sicherer Verschluss erzielt.

Gemäß einer Ausführungsform ist das Andruckelement des Halters schwenkbar mit dem Verankerungselement verbunden. Vorteilhaft können diese beiden Elemente so miteinander verbunden sein, dass ein freies Ende des Andruckelements in Richtung des Durchbruchs geschwenkt werden kann. Durch diese Schwenkbewegung wird das Intumeszenzmaterial der Brandschutzmanschette in Richtung des Durchbruchs gelenkt.

Vorzugsweise weist das Verankerungselement zumindest einen ersten und einen zweiten Schenkel auf. Der erste Schenkel kann zur Befestigung des Verankerungselements mit dem Untergrund vorgesehen sein, und das Andruckelement kann an dem zweiten Schenkel des Verankerungselements angeordnet sein.

Gemäß einer Ausführungsform kann außerdem eine Schwenkachse, um die das Andruckelement relativ zu dem Verankerungselement schwenkbar ist, in einem Übergangsbereich zwischen dem ersten und zweiten Schenkel angeordnet sein.

Bevorzugt weist das Verankerungselement zwei L-förmig angeordnete Schenkel auf.

Außerdem kann das Andruckelement mittels eines Biegeabschnitts schwenkbar mit dem Verankerungselement verbunden sein. Ein solcher Halter kann besonders kostengünstig hergestellt werden.

Gemäß einer Ausgestaltung der Erfindung handelt es sich bei dem Andruckelement des Halters um eine Blechlasche, die außerdem mit mindestens einem Haken versehen sein kann. Dieser Haken ist dazu vorgesehen mit der Brandschutzmanschette zusammenzuwirken. Alternativ kann also auch ein Dorn, eine Kralle oder ein anderes gleichwirkendes Mittel zur Sicherung der Brandschutzmanschette verwendet werden.

Gemäß einer weiteren Ausführungsform ist das Expansionselement in einer Tasche zwischen dem Andruckelement und dem Verankerungselement angeordnet. Diese Tasche verhindert ein seitliches Ausquellen des Intumeszenzmaterials des Andruckelementes. Somit kann der von dem Expansionselement aufgebrachte Intumeszenzdruck effektiv in eine Schwenkbewegung des Andruckelements umgesetzt werden.

Gemäß einer weiteren Ausführungsform ist die Tasche durch das Verankerungselement und das Andruckelement gebildet. Dabei kann das Verankerungselement oder das Andruckelement mit Seitenlaschen versehen sein, die sich in Richtung des Andruckelements bzw. des Verankerungselements erstrecken. Auf diese Weise kann die Tasche besonders kostengünstig realisiert werden.

Um das Expansionselement noch effektiver zu nutzen, kann die Tasche (ggf. zusätzlich) durch einen Gewebestreifen gebildet sein. Vorteilhaft kann diese Tasche an einem freien Ende des Andruckelements geschlossen sein. Eine solche durch einen Gewebestreifen gebildete Tasche verhindert ein Ausquellen des Intumeszenzmaterials des Expansionselementes, insbesondere an einem freien Ende des Andruckelements. Der von dem Expansionselement aufgebaute Intumeszenzdruck kann besonders effektiv genutzt werden.

Gemäß einem weiteren Aspekt der Erfindung kann der Halter gemäß einem oder mehreren der vorgenannten Aspekte der Erfindung als Befestigungsmaterial für eine Brandschutzmanschette bzw. Brandschutzbandage verwendet werden. Die bereits im Hinblick auf den Halter genannten Wirkungen und Vorteile treffen in gleicher oder ähnlicher Weise auch auf dessen Verwendung als Befestigungsmaterial für eine Brandschutzmanschette bzw. Brandschutzbandage zu. Eine Brandschutzbandage kann auch aus mehreren Wicklungen bestehen.

Weitere Merkmale und Vorteile der Erfindung ergeben sich aus der folgenden Beschreibung vorteilhafter Ausführungsbeispiele unter Bezugnahme auf die beigefügten Zeichnungen. Dabei zeigt:
- FIG.1: eine schematische Schnittansicht eines aus dem Stand der Technik bekannten Halters für eine Brandschutzmanschette,
- FIG. 2: eine Brandschutzmanschette in einer schematischen Draufsicht,
- FIG.3: eine schematische Schnittansicht eines Halters gemäß einem ersten Ausführungsbeispiel,
- FIG. 4: eine schematische Draufsicht dieses Halters,
- FIG.5: eine perspektivische Ansicht eines Halters gemäß einem zweiten Ausführungsbeispiel,
- FIG. 6: eine schematische Schnittansicht eines Halters gemäß einem dritten Ausführungsbeispiel,
- FIG.7: eine schematische Schnittansicht eines Halters in einem expandierten Zustand, gemäß einem Ausführungsbeispiel, und
- FIG. 8 - 10: einen Wanddurchbruch, an dem eine Brandschutzmanschette mit Haltern gemäß einem Ausführungsbeispiel befestigt ist, in einem Ausgangszustand, zu Beginn eines Brandes und nach fortgeschrittenem Brand, wobei der Wanddurchbruch durch die Brandschutzmanschette verschlossen ist.

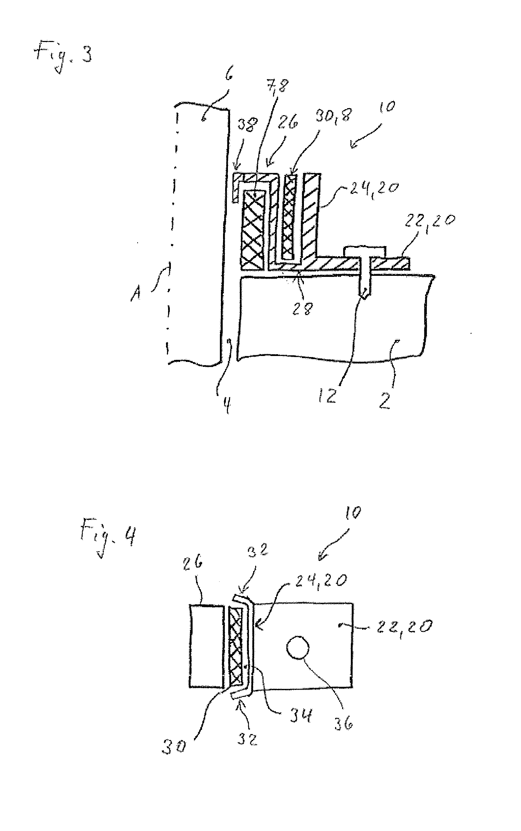

FIG. 3 zeigt eine schematische Schnittansicht eines Halters 10 gemäß einem ersten Ausführungsbeispiel. Der Halter 10 umfasst ein Verankerungselement 20, welches aus einem ersten und einem zweiten Schenkel 22, 24 besteht. Die Schenkel 22, 24 sind L-förmig zueinander angeordnet. Der erste Schenkel 22 ist mit Hilfe einer Schraube 12 als Befestigungselement an einer Wand 2 befestigt. In einem Übergangsbereich zwischen dem ersten und zweiten Schenkel 22, 24 ist ein Andruckelement 26 über einen Biegeabschnitt 28 mit dem Verankerungselement 20 verbunden. Das Andruckelement 26 und das Verankerungselement 20 können, alternativ zu dem Biegeabschnitt 28, auch auf andere Weise schwenkbar miteinander verbunden sein. Denkbar ist die Verwendung eines Gewebebandes oder eines einfachen Scharniers. Eine Schwenkachse, um welche das Andruckelement 26 gegenüber dem Verankerungselement 20 bewegbar bzw. schwenkbar ist, befindet sich in dem Übergangsbereich zwischen dem ersten und zweiten Schenkel 22, 24. Bevorzugt handelt es sich bei dem Andruckelement 26 um eine Blechlasche, die außerdem einen Haken 38 umfasst, der eine Brandschutzmanschette 7 sichert, von der aus Gründen der Übersichtlichkeit lediglich das umfasste Intumeszenzmaterial 8 dargestellt ist. Die Brandschutzmanschette 7 hat die Aufgabe den Durchbruch 4 der Wand 2 im Brandfall zu verschließen.

Zwischen dem Verankerungselement 20 und dem Andruckelement 26 befindet sich ein Expansionselement 30, welches ebenfalls aus Intumeszenzmaterial 8 besteht. Sowohl für die Brandschutzmanschette 7 als auch für das Expansionselement 30 kann Intumeszenzmaterial mit einer herkömmlichen Zusammensetzung, beispielsweise in einer Matrix, insbesondere Polymermatrix gebundene, bekannte Wirksubstanzen, wie Säurebildner, Kohlenstofflieferanten, Treibmittel und physikalisch expandierbare Verbindungen, wie Blähgraphit, verwendet werden. Bei dem Expansionselement 30 handelt es sich bevorzugt um einen flachen Streifen aus Intumeszenzmaterial 8, der mit einer ersten Flachseite an dem zweiten Schenkel 24 des Verankerungselements 20 und mit seiner gegenüberliegenden Flachseite an dem Andruckelement 26 anliegt.

Im Brandfall dehnt sich nicht nur das Intumeszenzmaterial 8 der Brandschutzmanschette 7 sondern auch das Intumeszenzmaterial 8 des Expansionselementes 30 aus. Durch die Expansion des Expansionselementes 30 wird ein Intumeszenzdruck auf das Andruckelement 26 ausgeübt, wodurch dieses gegenüber dem Verankerungselement 20 geschwenkt wird. Die Schwenkbewegung erfolg durch Verformung des Biegeabschnitts 28. Als Folge dieser Bewegung wird die Brandschutzmanschette 7 in Richtung des Durchbruchs 4 geschwenkt. Ihr Intumeszenzmaterial 8 expandiert somit nicht nur radial, sondern auch axial, d.h. parallel zur Längsachse A des im Brandfall ggf. vernichteten Rohres 6. Bei der Brandschutzmanschette 7 handelt es sich beispielsweise um eine Gewebemanschette. Es können jedoch auch andere Brandschutzmanschetten 7 wie z.B. Brandschutzbandagen verwendet werden, die auch mehrlagig sein können, welche weich bzw. flexibel genug sind, so dass diese durch den von dem Expansionselement 30 verursachten Intumeszenzdruck verformt werden können.

Um einen hinreichend großen Intumeszenzdruck aufbauen zu können, ist es vorteilhaft, wenn der Halter 10, gemäß einem weiteren Ausführungsbeispiel, eine aus dem Verankerungselement 20 und dem Andruckelement 26 gebildete Tasche aufweist, in welcher das Expansionselement 30 angeordnet ist. FIG. 4 zeigt einen solchen Halter 10 in einer schematischen Draufsicht. Der zweite Schenkel 24 des Verankerungselements 20 ist mit Seitenlaschen 32 versehen, die sich in Richtung des Andruckelements 26 erstrecken. Alternativ kann das Andruckelement 26 mit Seitenlaschen 32 versehen sein, die dem zweiten Schenkel 24 des Verankerungselements 20 zugewandt sind. Durch die Seitenlaschen 32 kann ein seitliches Ausquellen des Expansionselementes 30 verhindert werden, sodass sich in der Tasche 34 ein ausreichend hoher Intumeszenzdruck aufbauen kann.

Darüber hinaus kann in einer alternativen Ausführungsform das Verankerungselement (20) oder das Andruckelement (26) zusätzlich mit einer der Seitenlaschen 32 vergleichbaren Kopflasche (nicht in FIG. 4 gezeigt) versehen sein, die sich in Richtung des Andruckelements (26) bzw. des Verankerungselements (20) erstreckt und die an der der Wand (2) entgegensetzten Kante des Verankerungselements (20) oder des Andruckelements (26) angeordnet ist. Durch diese Kopflasche kann ein Ausquellen des Expansionselements 30 nach oben, d.h. von der Decke 2 weg, verhindert werden, was den Expansionsdruck in Richtung des Andruckelements 26 zusätzlich verstärkt.

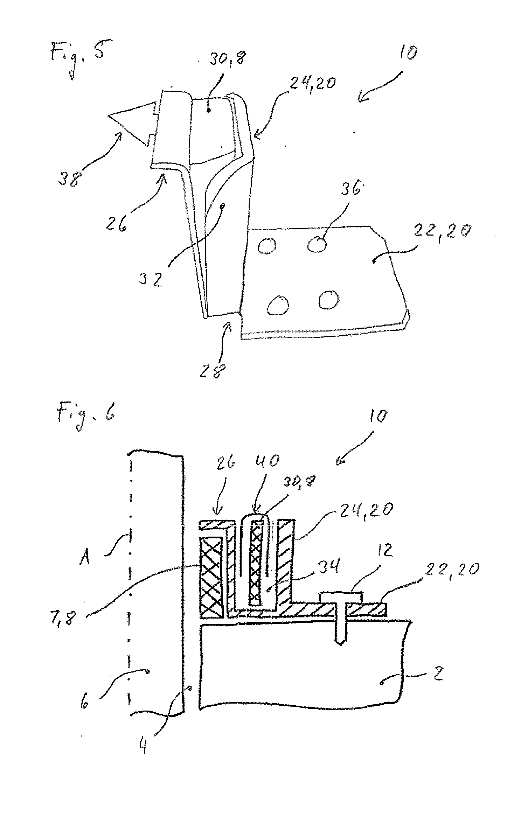

FIG. 5 zeigt einen solchen Halter 10 in einer vereinfachten, perspektivischen Ansicht. Zur Befestigung des Halters an einer Wand oder Decke ist der erste Schenkel 22 des Verankerungselements 20 mit vorzugsweise gestanzten Befestigungsöffnungen 36 versehen. Der Halter 10 kann bevorzugt aus einem Blechstreifen ausgestanzt und in die gewünschte Form gebogen sein. Das Andruckelement 26 weist außerdem einen Haken 38 auf, der mit der Brandschutzmanschette 7 zusammenwirken und diese insbesondere fixieren kann. Der Haken 38, bei dem es sich alternativ auch um einen oder mehrere Haken, Krallen oder ähnliches handeln kann, wird bevorzugt in die Brandschutzmanschette 7 eingepresst, um diese sicher zu befestigen.

FIG. 6 zeigt einen Halter 10 gemäß einem weiteren Ausführungsbeispiel. Der Halter 10 ist mit dem in FIG. 3 gezeigten Halter 10 vergleichbar. Er weist jedoch alternativ zu der oben beschriebenen Kopflasche (zusätzlich) einen Gewebestreifen 40 auf. Dieser Gewebestreifen 40 begrenzt die zwischen dem zweiten Schenkel 24 des Verankerungselements 20 und dem Andruckelement 26 gebildete Tasche 34 in axialer Richtung. Der Gewebestreifen 40 verhindert vorteilhaft ein Ausquellen des Intumeszenzmaterials 8 des Expansionselementes 30 in dieser Richtung. Insbesondere im Zusammenwirken mit den Seitenlaschen 32 kann so sichergestellt werden, dass zwischen dem Verankerungselement 20 und dem Andruckelement 26 im Brandfall ein hinreichend hoher Intumeszenzdruck aufgebaut werden kann, sodass die Brandschutzmanschette 7 zuverlässig in Richtung des Durchbruchs 4 verformt wird.

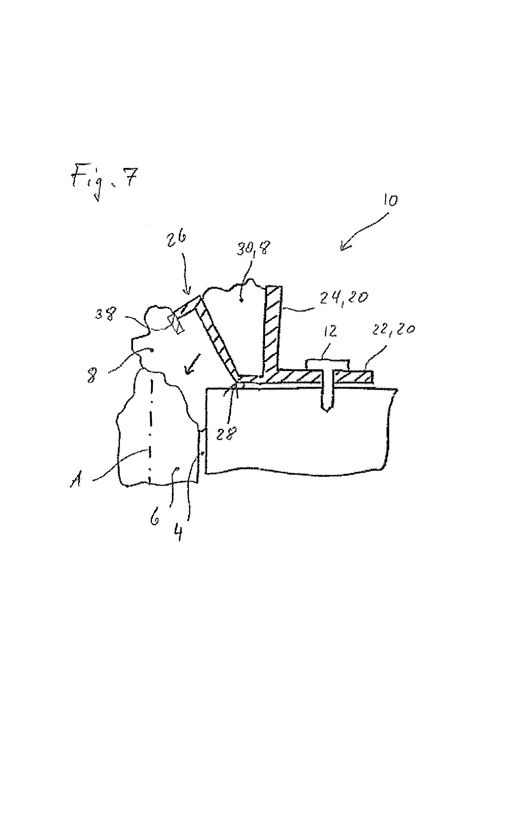

FIG. 7 zeigt eine weitere schematische Schnittansicht eines Halters 10, bei dem in Folge der Brandeinwirkung das Andruckelement 26 aus seiner ursprünglichen Lage geschwenkt wurde. Das Intumeszenzmaterial des Expansionselementes 30 hat sich in Folge der Brandeinwirkung ausgedehnt. Folglich wurde das Andruckelement 26 durch Verformung des Biegeabschnitts 28 gegenüber dem Verankerungselement 20 geschwenkt. Das Intumeszenzmaterial 8 der Brandschutzmanschette ist in Richtung des Durchbruchs 4 expandiert (wie durch einen Pfeil angedeutet) und schützt das bereits zerstörte Rohr 6 vor dem Feuer.

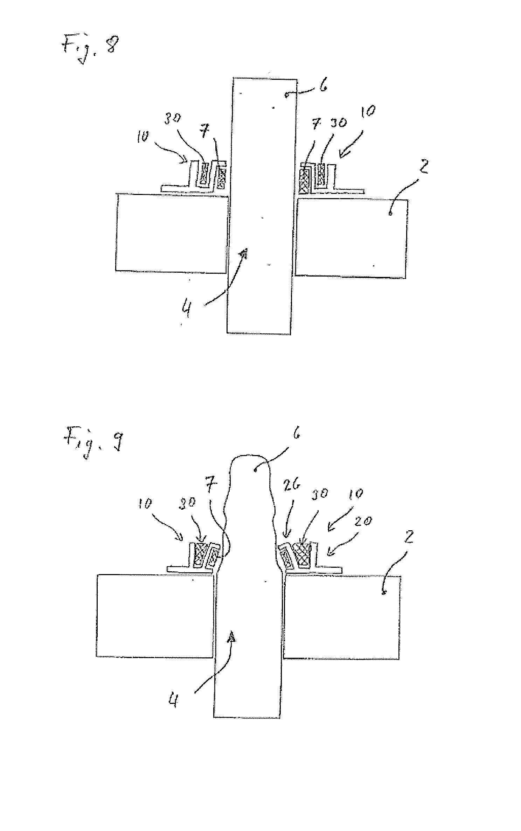

Die FIG. 8, 9 und 10 beschreiben das Zusammenwirken eines Halters 10 gemäß einem der Ausführungsbeispiele mit einer Brandschutzmanschette 7 während verschiedener Brandstadien. FIG. 8 zeigt ein Rohr 6, welches sich in einem in einer Wand 2 vorhandenen Durchbruch 4 erstreckt. Es ist einseitig mit einer Brandschutzmanschette 7 gesichert, die mit zwei Haltern 10 an der Wand 2 befestigt ist. Durch ein Feuer wird das Rohr 6 auf seiner oben dargestellten Seite zerstört; ein frühes Stadium zeigt FIG. 9. Die Expansionselemente 30 der Halter 10 sind in diesem Stadium bereits geringfügig expandiert, was dazu führt, dass das Andruckelement 26 gegenüber dem Verankerungselement 20 geschwenkt ist. Die von dem Andruckelement 26 des Halters 10 aufgenommene Brandschutzmanschette 7 ist bereits in diesem Stadium des Brandes deutlich in Richtung des Durchbruchs 4 geschwenkt.

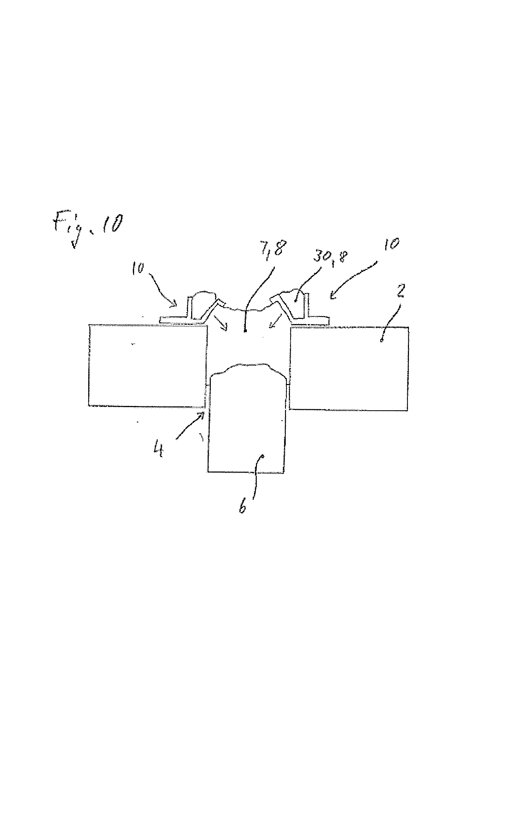

FIG. 10 zeigt die bereits aus den FIG. 8 und 9 bekannte Ansichten in einem späteren Brandstadium. Das Intumeszenzmaterial 8 der Brandschutzmanschette 7 hat den in der Wand 2 vorhandenen Durchbruch 4 vollständig verschlossen. Es ist tief in den Durchbruch 4 eingedrungen und verschließt diesen sicher. Das vormals in dem Durchbruch 4 vorhandene Rohr 6 ist weitgehend zerstört. Die Brandschutzmanschette 7 hat eine große Menge Intumeszenzmaterial 8 in den Durchbruch 4 abgegeben. Das Intumeszenzmaterial 8 der Brandschutzmanschette 7 wird effektiv genutzt und kann eine kompakte Aschekruste ausbilden. So kann eine hohe Feuerwiderstandsdauer erreicht werden.

### Bezugszeichenliste

- 2: Wand
- 4: Durchbruch
- 6: Rohr
- 7: Brandschutzmanschette
- 8: Intumeszenzmaterial
- 9: Gewebe
- 10: Halter
- 12: Schraube
- 14: Befestigungsabschnitt
- 16: Abstützabschnitt
- 18: Kralle
- 20: Verankerungselement
- 22: erster Schenkel
- 24: zweiter Schenkel
- 26: Andruckelement
- 28: Biegeabschnitt
- 30: Expansionselement
- 32: Seitenlaschen
- 34: Tasche
- 36: Befestigungsöffnungen
- 38: Haken
- 40: Gewebestreifen
- A: Längsachse

## Patentansprüche

1. Halter (10) für eine Brandschutzmanschette (7), mit einem Verankerungselement (20) zur Verankerung des Halters (10) an einem Untergrund (2) und mit einem Andruckelement (26), das dafür vorgesehen ist mit der Brandschutzmanschette (7) zusammenzuwirken, wobei das Andruckelement (26) relativ zu dem Verankerungselement (20) verstellbar ist und wobei zwischen dem Verankerungselement (20) und dem Andruckelement (26) ein Expansionselement (30) aus Intumeszenzmaterial (8) angeordnet ist.

2. Halter (10) nach Anspruch 1, bei dem das Andruckelement (26) schwenkbar mit dem Verankerungselement (20) verbunden ist.

3. Halter (10) nach Anspruch 2, bei dem das Verankerungselement (20) zumindest einen ersten und einen zweiten Schenkel (22, 24) aufweist, wobei der erste Schenkel (22) zur Befestigung des Verankerungselements (20) mit dem Untergrund (2) vorgesehen ist und das Andruckelement (26) an dem zweiten Schenkel (24) angeordnet ist.

4. Halter (10) nach Anspruch 3, bei dem eine Schwenkachse, um die das Andruckelement (26) relativ zu dem Verankerungselement (20) schwenkbar ist, sich in einem Übergangsbereich zwischen dem ersten und dem zweiten Schenkel (22, 24) befindet.

5. Halter (10) nach Anspruch 3 oder 4, bei dem das Verankerungselement (20) zwei L-förmig angeordnete Schenkel (22, 24) aufweist.

6. Halter (10) nach einem der Ansprüche 2 bis 5, bei dem das Andruckelement (26) mittels eines Biegeabschnitts (28) schwenkbar mit dem Verankerungselement (20) verbunden ist.

7. Halter (10) nach einem der vorhergehenden Ansprüche, bei dem das Andruckelement (26) eine Blechlasche ist, die mit mindestens einem Haken (38) versehen ist, der dazu vorgesehen ist mit der Brandschutzmanschette (7) zusammenzuwirken.

8. Halter (10) nach einem der vorhergehenden Ansprüche, bei dem das Expansionselement (30) in einer Tasche (34) zwischen dem Andruckelement (26) und dem Verankerungselement (20) angeordnet ist.

9. Halter (10) nach Anspruch 8, bei dem die Tasche (34) durch das Verankerungselement (20) und das Andruckelement (26) gebildet ist.

10. Halter (10) nach Anspruch 9, bei dem das Verankerungselement (20) oder das Andruckelement (26) mit Seitenlaschen (32) versehen ist, die sich in Richtung des Andruckelements (26) bzw. des Verankerungselements (20) erstrecken.

11. Halter (10) nach Anspruch 10, bei dem das Verankerungselement (20) oder das Andruckelement (26) zusätzlich mit einer Kopflasche versehen ist, die sich in Richtung des Andruckelements (26) bzw. des Verankerungselements (20) erstreckt und die an der der Wand (2) entgegensetzten Kante des Verankerungselements (20) oder des Andruckelements (26) angeordnet ist.

12. Halter (10) nach Anspruch 8, bei dem die Tasche (34) durch einen Gewebestreifen (40) gebildet ist.

13. Halter (10) nach Anspruch 12, bei dem die Tasche (34) an einem freien Ende des Andruckelements (26) geschlossen ist.

14. Verwendung eines Halters (10) nach einem der vorhergehenden Ansprüche als Befestigungsmaterial für eine Brandschutzmanschette (7).
